# EUROPEAN PATENT APPLICATION

(11) **EP 4 538 046 A1**
(43) Date of publication of application: **16.04.2025**
(21) Application number: 23202595.7
(22) Date of filing: 10.10.2023
(51) Int. Cl.: B41M 7/00, C09D 11/36, C09D 11/38, C09D 11/03, C09D 11/033, C09D 11/10, C09D 11/322

(54) **METHOD FOR APPLYING AN IMAGE, USE OF A PHOTO INITIATOR, PRINTING APPARATUS AND SOFTWARE PRODUCT**

(71) Applicant: Canon Production Printing Holding B.V., 5914 HH Venlo (NL)
(72) Inventor: WETJENS, Peter M.A., Venlo (NL); OGRINC, Hendrik J.A., Venlo (NL); CORNELISSENS, Femke R.A., Venlo (NL); WILLEMSE, Robin X.E., Venlo (NL)
(74) Representative: Canon Production Printing IP Department

(57) **Abstract**

The present invention relates to a method for applying an image and an printing apparatus suitable for performing such a method. The method includes applying a predetermined pattern of a radiation-curable gel ink onto a recording medium, wherein the radiation-curable gel ink comprises at least a curable monomer, a gelling agent and a photo initiator, the photoinitiator being selected from at least one of a polymerizable photo initiator or a polymeric photo initiator.

The invention further relates to a printing apparatus and a software product.

## Description

The present invention relates to a method for applying an image and an printing apparatus suitable for performing such a method. In particular the present invention relates to a method for applying an image.

The invention further relates to a printing apparatus and a software product.

### Background of the invention

Methods for applying an image onto a recording medium using a radiation-curable gel ink are known in the art. Generally, such methods comprise the step of applying the radiation-curable gel ink onto a recording medium, e.g. by jetting droplets of the ink using an ink jet printer.

After the ink has been applied onto the recording medium, the ink is irradiated using a suitable type of radiation to harden the ink. The ink may be irradiated using a curing unit configured to in operation emit a suitable type of radiation, such as UV radiation.

A known problem of printing using radiation-curable gel inks is that smudge may occur in the printed product. When printing radiation-curable gel inks, there is generally a time interval between applying the ink and curing the ink. A longer time interval between printing the ink and curing the ink may increase the level of smudge. The occurrence of smudge is an unwanted phenomenon.

Without wanting to be bound to any theory, it is believed that the occurrence of smudge relates to incomplete curing of the top surface of the print.

The curing level of the top surface of a print can be improved by using nitrogen blanketing during printing and curing. However, this solution is expensive and complicated. An alternative solution to incomplete curing is to increase the amount of photo initiator in the ink composition. However, this lowers the shelf life of the ink.

Therefore a need exists for applying an image while mitigating the above mentioned problems.

It is therefore an object of the present invention to provide such a method.

It is another object of the present invention to provide an printing apparatus suitable for performing such a method.

### Summary of the Invention

The object of the invention is achieved in a method for applying an image onto a recording medium, the method comprising the steps of:
a. Applying a predetermined pattern of a radiation-curable gel ink onto a recording medium to form an image, wherein the radiation-curable gel ink comprises at least a curable monomer, a gelling agent and a photo initiator;
b. irradiating the radiation-curable gel ink, wherein the time interval between applying the radiation-curable gel ink and curing the radiation-curable gel ink is at least 20 seconds;
wherein the photo initiator is selected from at least one of a polymerizable photo initiator or a polymeric photo initiator.

The method may be performed using a printing apparatus. A printing apparatus is also referred to as printer. The printer may be configured to in printing operation apply a radiation-curable gel ink. Suitable types of radiation-curable gel ink including radiation-curable inkjet gel inks are known in the art. Preferably, the printer may be an inkjet printer, configured to apply ink onto the recording medium by jetting droplets of ink onto the recording medium in a predetermined pattern to form an image.

The printing apparatus comprises a print unit. The print unit may be configured to in operation deposit a predetermined pattern of a radiation-curable gel ink on a recording medium. In the method according to the present invention, in step a), a predetermined pattern of a radiation-curable gel ink is applied onto a recording medium to form an image.

The print unit may comprise at least one inkjet print head configured to in operation jet ink onto the recording medium. The print head may be for example a thermal inkjet print head or a piezo electric inkjet print head. The printer may comprise a plurality of inkjet print heads. One type or color of ink may be used to form the image, but alternatively more than one type and/or color of ink may be used. A Cyan, a Magenta, a Yellow and a blacK ink may be used to form the image. In addition, one or more of a white ink, brown ink, grey ink, light magenta, light cyan, red, green, orange, purple ink may be used. Further, one or more of a primer composition, an overcoat composition and a metallic ink may be used. The print unit may be a page-wide print unit or may be a scanning print unit. A scanning print unit may be configured to in operation move in reciprocation in a scanning direction. The scanning direction may be perpendicular to a medium transport direction.

The radiation-curable gel ink may comprise at least a curable monomer, a gelling agent and a photo initiator.

The recording medium may be in an absorbing medium or non-absorbing medium. Examples of absorbing media include plain paper, vinyl, corrugated cardboard, folding carton, coated inkjet paper, uncoated inkjet paper, wall paper and fabrics.

Examples of non-absorbing media: PMMA films, PMMA rigids, fluted PP, LFM450 and IJM778.

A curable monomer is a component that may react (e.g. polymerize) under influence of suitable radiation, such as electromagnetic radiation, e.g. ultraviolet (UV) radiation. Examples of radiation-curable monomers are epoxides, vinyls, vinylether acrylates and (meth)acrylates. (Meth-)acrylates may comprise one or more reactive groups for forming an acrylate polymer. The radiation-curable medium may comprise one type of radiation curable compound or alternatively, the radiation-curable medium may comprise a mixture of radiation-curable compounds.

The ink further comprises a gellant. Gellants are also known in the art as gelling agents or thickeners. The presence of a gellant can cause a viscosity increase in the inkjet ink composition upon cooling of the ink composition. The viscosity increase in the ink composition should be sufficient, to adequately control droplet spreading.

Examples of gellants used in gelling radiation curable inkjet ink compositions are waxes, such as paraffin wax, microcrystalline wax, polyethylene waxes, polypropylene waxes, curable waxes and natural waxes, such as animal-based waxes or plant-based waxes, fatty acids, fatty alcohols, ketones, fatty acid esters and fatty acid amides. Because gelling inks have reduced spread of ink on the recording medium, due to their gelling property, it may not be necessary to cure the ink droplets immediately after applying them onto the recording medium. It is possible to keep the droplets in an uncured state on the recording medium, without color bleeding occurring. The gellant may be present in an amount of from 0.1 wt% to 15 wt% based on the total weight of the ink composition, preferably from 0.2 wt% to 10 wt% based on the total weight of the ink composition, more preferably from 0.4 wt% to 5 wt% based on the total weight of the ink composition.

The radiation-curable medium may further comprise at least one photo initiator. A photo initiator is a component that improves the efficiency of curing; i.e. increases the polymerization rate when the ink composition is irradiated with suitable radiation, such as UV radiation. The photo initiator is a polymeric or a polymerizable photo initiator.

A polymeric photo-initiator may be a polymer comprising a molecular structure that can function as a photo initiator. The structure of the polymer is not limited. For example the polymer may be a linear polymer, a branched polymer, a graft polymer, a hyperbranched polymer or a dendrimer. Commercially available examples of polymeric photo initiators, including polymeric synergists, include Speedcure^{™} 7040, Omnipol^{™} 910, Omnipol^{™} BP, Genopol^{™}
BP-1, Genopol^{™} BP-2, Speedcure^{™} 7005, Goldcure^{™} 2700, Genopol^{™} TX-1, Genopol^{™} TX-2, Speedcure^{™} 7010, Omnipol ASA, Omnipol^{™} TX, JRCure 1508, Omnipol^{™} BL 728 and Omnipol-TP.

A polymerizable photo initiator is a photo initiator that comprises a polymerizable group. When an ink composition comprising a polymerizable photo initiator is cured, the photo initiator may become incorporated in the polymer structure that is formed. Examples of polymerizable groups are ethylenically unsaturated polymerizable groups such as a (meth)acrylate group, a vinyl group, a styrene group, a vinyl ether group, an acrylamide group, an allyl ether group, an allyl ester group, a vinyl ester group, a maleate group, a succinate group and a maleimide group.

Optionally, a mixture of one or more of a polymeric photo initiator and one or more of a polymerizable photo initiator may be used in an ink composition.

It was surprisingly found that the use of an ink comprising a polymeric or polymerizable photo initiator in a method for applying an image onto a recording medium, reduces the occurrence of smudge, even if the time interval between applying the radiation-curable gel ink and curing the radiation-curable gel ink is at least 20 seconds.

Further, additional components may be added to the radiation curable medium. For example, the radiation curable medium may comprise an inhibitor, a solvent, a surfactant, a colorant, an antibacterial component and an anti-fungi component.

The printing apparatus may further comprise a medium support. The medium support may be configured to in operation support the recording medium. Optionally, the recording medium may be moved in a medium transport direction. The medium support may comprise a flat table. Optionally, the medium support may comprise an endless belt. The medium support may comprise holes for applying an underpressure. Applying an underpressure may fix the recording medium to the medium support.

Optionally, the printing apparatus may comprise a medium transport unit. The medium transport unit may be configured to in operation move the recording medium relative to the printer in the medium transport direction.

The printing apparatus further comprises a curing unit. The curing unit is configured to in operation irradiate a recording medium provided with a radiation-curable ink. By irradiating the radiation-curable ink, a chemical reaction may occur in the radiation-curable ink, which may result in curing or pre-curing of the fluid. The curing unit may be a scanning curing unit. Alternatively, the curing unit may be a page-wide curing unit.

In the method according to the present invention, the time interval between applying the radiation-curable gel ink and curing the radiation-curable gel ink is at least 20 seconds. The radiation-curable gel ink may not be cured immediately after being deposited onto the recording medium. Because the ink is a gelling ink, the ink may have a viscosity that is sufficiently high to prevent excessive spreading on the recording medium. Thus, the ink may stay on the recording medium in an uncured state without excessive spreading of the droplets occurring. Excessive spreading could result in unwanted artefacts, such as color bleeding. Leaving the ink uncured after depositing allows the ink droplets to spread, without spreading excessively, which may result an increased gloss level of the printed image. Further, leaving the ink uncured may allow to print multiple swaths of ink on top of one another before curing the ink. Positioning multiple swaths of ink on top of one another before curing may result in improved print quality compared to placing a layer of ink on top of a cured ink layer.

The time interval between applying the radiation-curable gel ink and curing the radiation-curable gel ink may be at least 20 seconds, preferably at least 30 seconds, more preferably at least 60 seconds. In case the time interval between applying the radiation-curable gel ink and curing the radiation-curable gel ink is less than 20 seconds, the ink may not have sufficient time to spread.

In an embodiment, the photo initiator is a polymeric photo initiator. The polymeric photo initiator may be a component having a high molecular weight, also before the ink composition is irradiated with suitable radiation. It was surprisingly found that using a polymeric photo initiator in the ink composition, in combination with the time delay of at least 20 seconds between applying the ink and curing the ink, may improve the print quality of the printed image.

In a further embodiment, the photo initiator is a polymeric thioxanthone photo initiator. A polymeric thioxanthone photo initiator may be suitable used in the method according to the present invention. Commercially available examples of polymeric thioxanthone photo initiators include Genopol^{™} TX-1, Genopol^{™} TX-2, Speedcure^{™} 7010, Omnipol^{™} TX, JRCure 1508 and Omnipol^{™} BL 728.

In an embodiment, the photo initiator is present in an amount of from 0,5 wt% to 15 wt% based on the total amount of the ink composition. Preferably, photo initiator is present in an amount of from 1 wt% to 10 wt% based on the total amount of the ink composition. More preferably, the photo initiator is present in an amount of from 1,5 wt% to 8 wt% based on the total amount of the ink composition.

If the amount of photo initiator is lower than 0,5 wt%, the polymerization reaction may not be properly initiated, resulting in poor curing. If the amount of photo initiator is higher than 15 wt%, the shelf life of the ink may be reduced, which is unwanted.

In an embodiment, the polymeric photo-initiator is present in an amount of from 3 wt% to 10 wt % based on the total amount of the ink composition. Preferably, the polymeric photo-initiator is present in an amount of from 4 wt% to 8 wt % based on the total amount of the ink composition.

In an embodiment, the predetermined pattern is applied in multiple layers and the layers are deposited before the radiation-curable gel ink is irradiated.

A printed image may comprise a plurality of layers of ink. Ink may be applied in a plurality of swaths, wherein a new swath of ink is applied onto a previously applied swath of ink. The swaths, or layers may together form an image. All ink layers may be applied onto the recording medium before the ink is cured by irradiating the ink. The use of radiation-curable gel ink allows to apply relatively thick layers onto a recording medium, before curing the ink. Thick layers of ink are difficult to cure, as the radiation needs to penetrate through a thick layer of ink to cure the entire layer, including the ink-recording medium interface, the bulk of the layer and the ink-air interface. The present invention allows to efficiently cure the entire layer of ink and creating prints having good print quality, including good surface cure.

In an embodiment, the radiation-curable gel ink is irradiated with at least two types of radiation. The radiation-curable gel ink may be irradiated with at least a first type of radiation and a second type of radiation. Optionally, the first type of radiation and the second type of radiation may (partially) overlap. Optionally, the ink may be irradiated by additional types of radiation, such as a third type of radiation. The third type of radiation may be UV radiation, for example, UV-a, UV-b or UV-c radiation.

In an embodiment, the time interval between applying the radiation-curable gel ink and curing the radiation-curable gel ink is at least 30 seconds. The time interval between applying the radiation-curable gel ink and curing the radiation-curable gel ink may be at least 30 seconds, preferably at least 60 seconds. In case the time interval between applying the radiation-curable gel ink and curing the radiation-curable gel ink is less than 30 seconds, an image may be formed comprising a plurality of layers, without intermediate curing of the ink. In case the time interval between applying the ink and curing the ink is at least 30 seconds, the ink may spread sufficiently, resulting in good image quality.

In an embodiment, the gellant is an organic gellant. Examples of organic gellants include waxes, such as paraffin wax, microcrystalline wax, polyethylene waxes, polypropylene waxes, curable waxes and natural waxes, such as animal-based waxes or plant-based waxes, fatty acids, fatty alcohols, ketones, fatty acid esters and fatty acid amides. Radiation-curable inks comprising an organic gellant may be suitably used in a method according to the present invention.

In a further embodiment, the gellant is a fatty acid ester. Fatty acids are suitable for forming esters, when reacted with a compound comprising an hydroxyl functional group. The fatty acids may be saturated or non-saturated fatty acids. Non-saturated fatty acids may be monounsaturated fatty acids or polyunsaturated fatty acids. Non-saturated fatty acids comprise an alkene functional group. Upon curing of the ink, the alkene functional group may react and the ester compound may be incorporated in the network formed by the radiation-curable component. Preferably, the fatty acid is a saturated fatty acid. Fatty acid ester may be suitably used a s a gellant in a radiation-curable ink.

In a further embodiment, the gellant is an ester obtainable by a condensation reaction between a fatty acid and a component selected from the group consisting of pentaerythritol, cyclodextrine, glycerol, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane.

In an embodiment, the recording medium is an absorbing medium. When using an absorbing medium, components of the ink may be absorbed into the recording medium if the ink is not yet (fully) cured). Printing on an absorbing medium using a radiation-curable ink and allowing a time interval between application of the ink and curing of the ink often results in unsatisfactory prints. It was surprisingly found that using a polymeric or polymerizable photo initiator, satisfactory prints can be made, even when using an absorbing medium. Examples of absorbing media include plain paper, vinyl,corrugated cardboard, folding carton, coated inkjet paper, uncoated inkjet paper, wall paper and fabrics.

In an aspect of the invention, use of a photo initiator in a radiation-curable gel ink is provided, wherein the radiation-curable gel ink comprises at least a curable monomer, a gelling agent and a photo initiator and wherein the photo initiator is selected from at least one of a polymerizable photo initiator or a polymeric photo initiator.

Said photo initiator may be used for preparing an ink that may suitably be used in the method according to the present invention.

In a further aspect of the invention, a printing apparatus is provided, the printing apparatus comprising:
- at least one print unit for depositing a radiation-curable gel ink;
- a curing unit;
- a recording medium support for supporting a recording medium;
- a control unit configured to in operation control the printing apparatus to perform a method according to the present invention.

The printer apparatus is thus suitable for performing the method according to the present invention.

In a further aspect of the invention, a software product is provided, the software product comprising program code on a non-transitory machine-readable medium, wherein the program code, when loaded into a controller of a printing apparatus with at least one printing unit for depositing a radiation-curable gel ink, a curing unit and a control unit, causes the controller to perform a method according to the present invention. The software product may be suitably used for performing the method according to the present invention.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic perspective view of a first example of a printing system according to the present invention in a first printing mode;
Fig. 2 is a schematic perspective view of a second example of a printing system according to the present invention in a second printing mode;
Fig. 3 is a schematic diagram of a control unit of a reprographic system according to Fig. 1 or 2;
Fig. 4 shows a schematic representation of a Huber carboning tester;
Fig. 5A-5C show test results of the comparison experiment.

In the drawings, same reference numerals refer to same elements.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

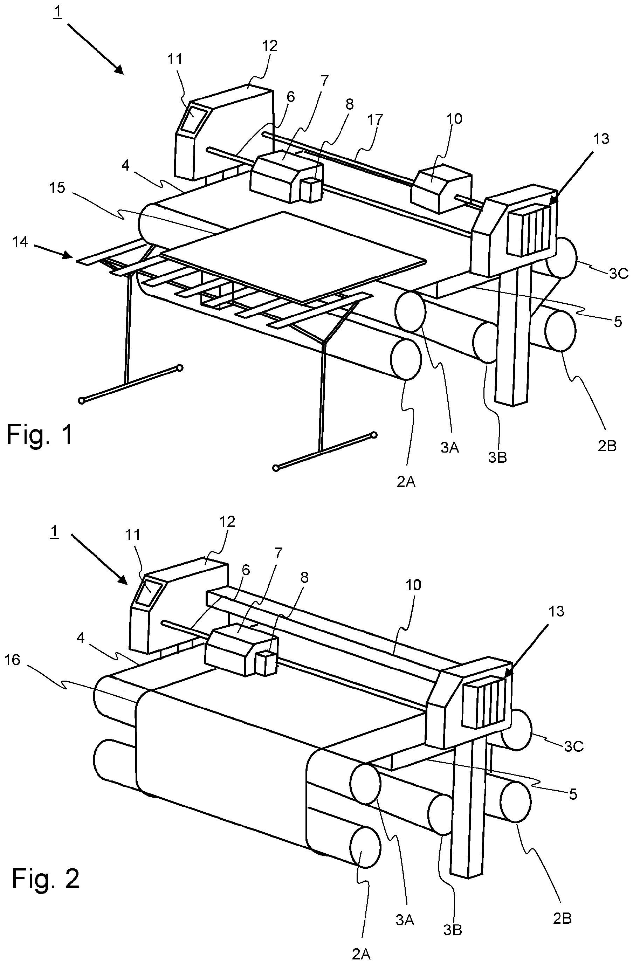

Fig. 1 shows a printing apparatus. A printing apparatus is also known as printer. The printing apparatus 1 comprises an scanning printing unit 7 for printing on a recording medium 15. The recording medium 15 in Fig. 1 is a relatively rigid substrate, such as a panel. The recording medium 15 is supplied from a media input unit 14, which may be configured for storing a plurality of such print media 15 and supplying these to the printer 1. The printer 1 comprises a medium support 4. Printer 1 may further comprise transport means for receiving and transporting the recording medium 15 along the scanning printing unit 7. In Fig. 1, the medium support is embodied as an endless belt 4. The endless belt is an endless transport belt 4 supported on a plurality of support rollers 3A, 3B, 3C. At least one of the support rollers 3A, 3B, 3C is provided with driving means for moving the belt 4. The belt 4 is therefore configured to support and transport the recording medium. Additionally, one or more one of the support rollers 3A, 3B, 3C may be configured to be moved and/or tilted to adjust and control the lateral position of the belt 4. The scanning printing unit 7may be provided with a sensor 8, such as a CCD camera, to determine the relative position of belt 4 and/or the recording medium 15. Data from said sensor 8 may be applied to control the position of the belt 4 and/or the recording medium 15. The belt 4 is further provided with through-holes and a suction box 5 in connection with a suction source (not shown), such that an underpressure may be applied to the recording medium 15 via the through-holes in the belt 4. The underpressure adheres the recording medium 15 flatly to the belt 4 and prevents displacement of the recording medium 15 with respect to the belt 4. Due to this holding the belt 4 is able to transport the recording medium 15. It will be appreciated that other suitable transport means, such as rollers, steppers, etc, may alternatively be applied. The recording medium 15 may be transported stepwise and/or in continuous movement. The scanning printing unit 7 is configured to translate along a first guide beam 6 in a scanning direction. The scanning direction is perpendicular to the direction in which the print medium is transported by the belt 4. The scanning printing unit 7 holds a plurality of print heads (not shown), which are configured to jet a plurality of different marking materials (different colors of ink, primers, coatings, etc.) on the recording medium 15. Each marking material for use in the scanning printing unit 7 is stored in one of a plurality of containers arranged in fluid connection with the respective print heads for supplying marking material to said print heads to print an image on the recording medium 15.

The application of the marking material, such as the radiation-curable ink from the printing units is performed in accordance with data provided in the respective print job. The printing unit may comprise one or more inkjet print heads. The timing by which the droplets of marking material are released from the one or more print heads determines their position on the recording medium 15. The timing may be adjusted based on the position of the scanning printing unit 7 along the first guide beam 6. The above mentioned sensor 8 may therein be applied to determine the relative position and/or velocity of the scanning printing unit 7 with respect to the recording medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the recording medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit is provided downstream of the scanning printing unit 7. The fixation unit may emit radiation to facilitate the marking material fixation process. In the example of Fig. 1, the fixation unit is page-wide curing array 10. The page-wide curing array 10 extends in the main scanning direction. The page-wide curing array does not move in operation in the main scanning direction. The page-wide array may move in the direction of medium transport, which is a direction perpendicular to the scanning direction.

The page-wide curing array 10 is configured to in operation emit radiation of certain frequencies, which interacts with the marking materials, for example UV light in case of UV-curable inks. Optionally (not shown), the scanning printing unit 7 may be provided with a further fixation unit on the same carriage which holds the print heads. This further fixation unit can be used to (partially) cure and/or harden the marking materials, independent of or interaction with the page-wide curing array 10.

After printing and fixation, the recording medium 15 is transported to a receiving unit (not shown). The receiving unit may comprise a take-up roller for winding up the recording medium 15, a receiving tray for supporting sheets of recording medium 15, or a rigid media handler, similar to the media input unit 14. Optionally, the receiving unit may comprise processing means for processing the medium after printing, e.g. a posttreatment device such as a coater, a folder, a cutter, or a puncher.

Printing apparatus 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the recording medium 15. Such rigid print media 15 may be panels, for example panels for doors or walls, corrugated media, plates formed of plastic or metal, etc. To handle these rigid print media 15, the printer 1 in Fig. 1 is configured with a substantially linear transport path: from the media input device 14, the recording medium 15 moves forward along the scanning printing unit 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

### Control

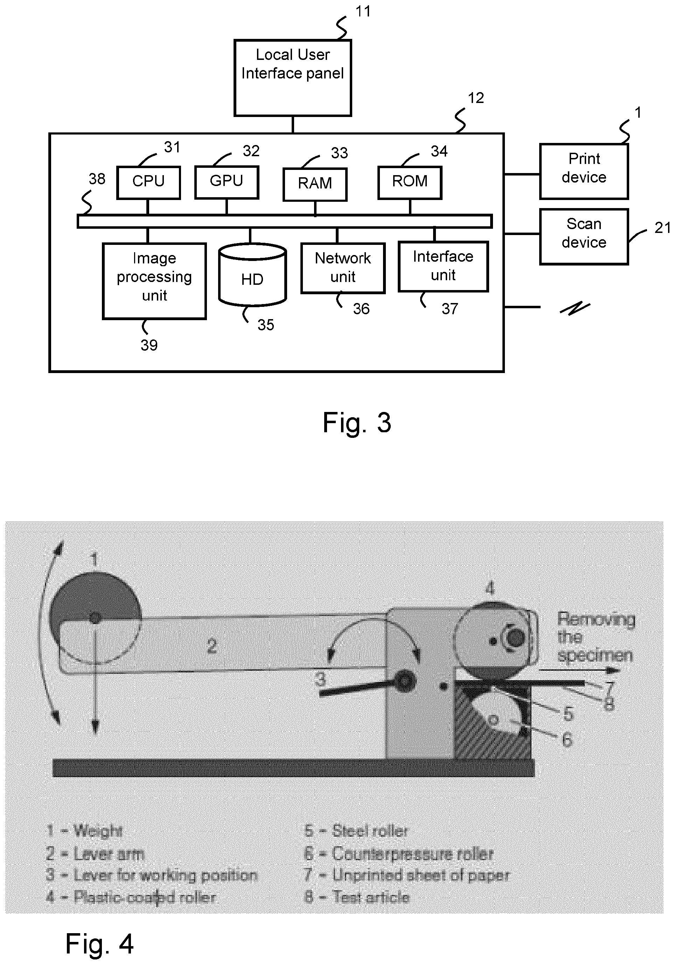

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client devices, such as scan device 21 and to the printing system 1. The network unit 36 connects the control unit 12 to the network N and is designed to provide communication with the workstations (not shown) and with other devices 21 reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

### Experiments and examples

### Materials

SR355, SR339C, SR506D, SR531 and CN991 were obtained from Arkema, Genomer 5161, ITX and EDB were obtained from Rahn, BYK 333 was obtained from BYK, pentaerythritoltetrastearate was obtained from TCI chemicals, BAPO was obtained from Arkema (Lambson), JRCURE 1508 was obtained from Tianjin Jiuri materials Co. and phenothiazine was obtained from Allessa. Pigments were obtained from Sun as dispersions (C: 25 wt% pigments; M: 23 wt% pigments; Y: 20 wt% pigments; K: 25 wt% pigments).

MPI2000 was obtained from Avery; LFM450 was obtained from Canon. All materials were used as obtained, unless stated otherwise.

### Methods

### Printing method

Prints were made on a Colorado 1650 printer. The printer was modified by replacing the scanning cure unit by a page-wide lamp. As a recording medium, MPI2000 and LFM450 were used. MPI2000 is a vinyl substrate, LFM450 is a polyester film. The scanning of the print head carriage was controlled, such that the time interval between application of ink and curing of the ink was either 18 seconds or 35 seconds.

The temperature of the print surface was controlled at 20°C, 24°C, 28°C or 32°C.

### Smudge

Smudge was measured using a Huber carboning tester (see Fig. 4). The sample is pulled through the tester with an unprinted sheet of paper on top. The optical density of the carboning on the unprinted sheet of paper (ΔOD) is used as a measure for smudge. The higher the values measured for smudge the worst the ink performance.

### Ink Preparations.

Ink compositions **Ex 1, Ex2** and **CE 1** were prepared by providing the components shown in table 1 in the amount shown in table 1 and mixing the components.

The first ink composition is ink composition **Ex 1,** which is an ink composition according to the present invention. Also the second ink composition **Ex 2** is an ink composition according to the present invention.

The third ink composition is ink composition **CE 1,** which is an ink composition not according to the present invention.

**Table 1: Ink compositions Ex 1, Ex 2 and CE 1**

| | **Ex 1** | | | | **Ex 2** | | | | **CE 1** | | | |
|---|---|---|---|---|---|---|---|---|---|---|---|---|
| | C | M | Y | K | C | M | Y | K | C | M | Y | K |
| SR355 | 1.49 | 1.47 | 1.95 | 1.49 | 1.49 | 1.47 | 1.95 | 1.49 | 1.49 | 1.47 | 1.95 | 1.49 |
| SR339C | 18,37 | 16,77 | 17,37 | 18,50 | 17,37 | 15,77 | 16,37 | 17,50 | 18,37 | 16,77 | 17,37 | 18,50 |
| SR506D | 18,37 | 16,77 | 17,37 | 18,50 | 17,37 | 15,77 | 16,37 | 17,50 | 18,37 | 16,77 | 17,37 | 18,50 |
| SR531 | 18.37 | 16.77 | 17.37 | 18.50 | 17.37 | 15.77 | 16.37 | 17.50 | 18.37 | 16.77 | 17.37 | 18.50 |
| CN991 | 21.68 | 16.93 | 19.25 | 20.97 | 20.93 | 16.18 | 18.50 | 20.22 | 21.68 | 16.93 | 19.25 | 20.97 |
| Genomer 5161 | 5.00 | 5.00 | 5.00 | 5.00 | 5.00 | 5.00 | 5.00 | 5.00 | 5.00 | 5.00 | 5.00 | 5.00 |
| phenothiazi ne | 0.07 | 0.07 | 0.07 | 0.07 | 0.07 | 0.07 | 0.07 | 0.07 | 0.07 | 0.07 | 0.07 | 0.07 |
| pigment dispersion C | 6.80 | 0 | 0 | 0 | 6.80 | 0 | 0 | 0 | 6.80 | 0 | 0 | 0 |
| pigment dispersion M | 0 | 16.39 | 0 | 0 | 0 | 16.39 | 0 | 0 | 0 | 16.39 | 0 | 0 |
| pigment dispersion Y | 0 | 0 | 11.70 | 0 | 0 | 0 | 11.70 | 0 | 0 | 0 | 11.70 | 0 |
| pigment dispersion K | 0 | 0 | 0 | 7.04 | 0 | 0 | 0 | 7.04 | 0 | 0 | 0 | 7.04 |
| BYK 333 | 0.50 | 0.49 | 0.49 | 0.49 | 0.50 | 0.49 | 0.49 | 0.49 | 0.50 | 0.49 | 0.49 | 0.49 |
| pentaerythr itoltetraste a rate | 0.60 | 0.59 | 0.68 | 0.69 | 0.60 | 0.59 | 0.68 | 0.69 | 0.60 | 0.59 | 0.68 | 0.69 |
| BAPO | 1.00 | 1.00 | 1.00 | 1.00 | 1.00 | 1.00 | 1.00 | 1.00 | 1.00 | 1.00 | 1.00 | 1.00 |
| JRCURE 1508 | 3.75 | 3.75 | 3.75 | 3.75 | 7.50 | 7.50 | 7.50 | 7.50 | 0 | 0 | 0 | 0 |
| ITX | 0 | 0 | 0 | 0 | 0 | 0 | 0 | 0 | 3.75 | 3.75 | 3.75 | 3.75 |
| EDB | 4.00 | 4.00 | 4.00 | 4.00 | 4.00 | 4.00 | 4.00 | 4.00 | 4.00 | 4.00 | 4.00 | 4.00 |

### Comparison Experiment: Smudge tests

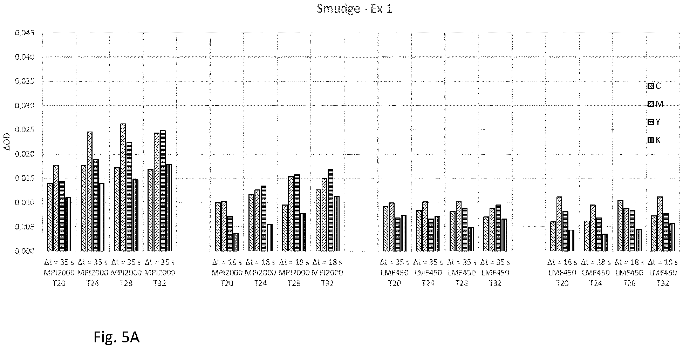

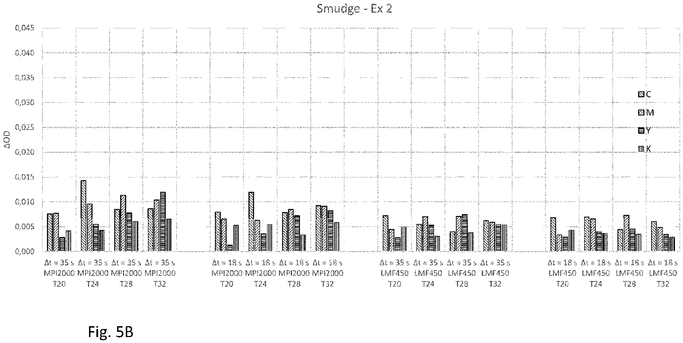

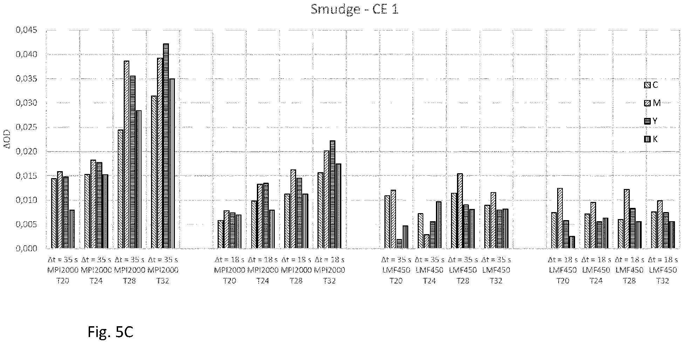

Prints were made with using ink compositions **Ex 1, Ex 2** and **CE 1** in Cyan, magenta, Yellow and blacK. For each ink composition, a print was made on MPI2000 as well as on LFM450. Further, for each combination of ink composition and recording medium, a print was made, wherein the time interval between depositing the ink and curing the ink was 18 seconds and a print was made, wherein the time interval between depositing the ink and curing the ink was 35 seconds. The prints prepared were subjected to a smudge test. The results are shown in Fig. 5A - 5C. Fig. 5A shows the smudge experiments performed on prints made using ink composition **Ex 1,** Fig. 5B shows the smudge experiments performed on prints made using ink composition **Ex 2** and Fig. 5C shows the smudge experiments performed on prints made using ink composition **CE 1.** The higher the difference in optical density (ΔOD), the higher the level of smudge. The lower the difference in optical density (ΔOD), the better the result.

In Fig. 5C, it is shown that the experiment performed with ink composition **CE 1,** a time interval of 35 s and MPI2000 as a recording medium, have a high level of smudge. Furthermore, the level of smudge increases with increases surface temperature. When comparing these experiments with the experiment performed under similar conditions (a time interval of 35 s and MPI2000 as a recording medium), using a different ink composition, i.e. an ink composition comprising a polymeric photoinitiator, then it is observed that the level of smudge is lower when an ink comprising a polymeric photo initiator is used. The decrease in smudge when using an ink comprising a polymeric photoinitiator is stronger for the prints made using a time interval of 35s between applying the ink and curing the ink, than for prints made using a time interval of 18s between applying the ink and curing the ink.

Further, when comparing the experiments shown in Fig. 5A and Fig. 5B, it is observed that a higher amount of polymeric photoinitiator in the ink corresponds to a lower level of smudge.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Method for applying an image onto a recording medium, the method comprising the steps of:
a. Applying a predetermined pattern of a radiation-curable gel ink onto a recording medium to form an image, wherein the radiation-curable gel ink comprises at least a curable monomer, a gelling agent and a photo initiator;
b. irradiating the radiation-curable gel ink, wherein the time interval between applying the radiation-curable gel ink and curing the radiation-curable gel ink is at least 20 seconds;
**characterized in that** the photo initiator is selected from at least one of a polymerizable photo initiator or a polymeric photo initiator.

2. Method according to claim 1, wherein the photo initiator is a polymeric photo initiator.

3. Method according to claim 2, wherein the photo initiator is a polymeric thioxanthone photo initiator.

4. Method according to claim 2, wherein the polymeric photo initiator is present in an amount of from 2 wt% to 15 wt% based on the total amount of the ink composition.

5. Method according to any of the preceding claims, wherein the predetermined pattern is applied in multiple swaths and the swaths are deposited before the radiation-curable gel ink is irradiated.

6. Method according to any of the preceding claims, wherein the radiation-curable gel ink is irradiated with at least two types of radiation.

7. Method according to any of the receding claims, wherein the time interval between applying the radiation-curable gel ink and curing the radiation-curable gel ink is at least 30 seconds.

8. Method according to any of the preceding claims, wherein the gellant is an organic gellant.

9. Method according to claim 8, wherein the gellant is a fatty acid ester.

10. Method according to any of the preceding claims, wherein the recording medium is an absorbing medium.

11. Use of a photo initiator in a radiation-curable gel ink, wherein the radiation-curable gel ink comprises at least a curable monomer, a gelling agent and a photo initiator and wherein the photo initiator is selected from at least one of a polymerizable photo initiator or a polymeric photo initiator.

12. Printing apparatus comprising:
• at least one print unit for depositing a radiation-curable gel ink;
• a curing unit;
• a recording medium support for supporting a recording medium;
• a control unit configured to in operation control the printing apparatus to perform a method according to any of claims 1-10.

13. A software product comprising program code on a non-transitory machine-readable medium, wherein the program code, when loaded into a controller of a printing apparatus with at least one printing unit for depositing a radiation-curable gel ink, a curing unit and a control unit, causes the controller to perform a method according to any of claims 1-10.
